# EUROPEAN PATENT APPLICATION

(11) **EP 1 617 679 A2**
(43) Date of publication of application: **18.01.2006**
(21) Application number: 05254376.6
(22) Date of filing: 13.07.2005
(51) Int. Cl.: H04N 7/26

(54) **Method and apparatus for scalably encoding and decoding colour video**

(30) Priority: 15.07.2004 KR 2004055081
(71) Applicant: Daeyang Foundation, Seoul, 143-747 (KR); SAMSUNG ELECTRONICS CO., LTD., Suwon-si, Gyeonggi-do (KR)
(72) Inventor: Kim, Hae-kwang, Gwangjin-gu Seoul (KR)
(74) Representative: Robinson, Ian Michael

(57) **Abstract**

A scalable encoding and decoding method and apparatus based on color information of moving pictures are provided. The color video encoding method comprises: generating an encoded luminance bitstream by encoding a luminance component using a motion prediction based encoding method; and generating at least one encoded chrominance bitstream by encoding at least one color format chrominance component using a motion vector generated by the motion prediction based encoding method. Using this method, storage, transmission, and reproduction of a moving picture can be efficiently performed by scalably encoding the moving picture according to a color format in which the moving picture is encoded.

## Description

The present invention relates generally to scalable encoding and decoding of moving pictures, and more particularly, to scalable encoding and decoding based on color information of moving pictures.

When a moving picture is encoded, a color format of the moving picture is presented using a ratio of luminance to chrominance of pixels included in a pixel line which extends in a horizontal direction of the moving picture. Hereinafter, the luminance will be represented by Y, and the chrominance will be represented by Cb/Cr. The luminance represents the brightness of an image, and in an ITU-R standard, luminance of one pixel is expressed with eight bits. The chrominance represents the color of an image, and expresses the color of a pixel with two eight-bit values (Cb/Cr). A coordinate system representing a color is called a color space, and in the Moving Picture Encoding Group (MPEG) standard, the color format of the moving picture is presented using three eight-bit pieces of information, i.e., Y, Cb, and Cr.

When a moving picture is presented using Y, Cb, and Cr, a plurality of color formats can exist according to the ratios between Y, Cb, and Cr. However, since Y, i.e., the luminance, is equal in all of the color formats, it is inefficient to repeatedly encode the luminance Y when moving pictures are encoded in different color formats.

In conventional moving picture encoding technologies suggested by standards such as MPEG-2, MPEG-4, and Joint Video Team (JVT) standards, since the luminance Y is repeatedly encoded when a moving picture is encoded in a 4:4:4 color format, a 4:2:2 color format, and a 4:2:0 color format, an amount of data becomes unnecessarily large when the moving pictures encoded in a plurality color formats are stored or transmitted, and the encoding is inefficient.

Also, in the conventional moving picture encoding technologies, a method of scalably encoding or decoding a color image format has not been developed.

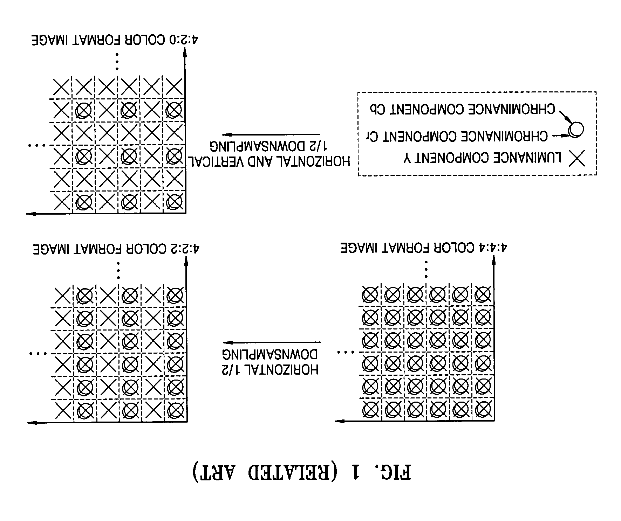

Figure 1 illustrates an operation of performing loss encoding by reducing a color space resolution.

As described above, a pixel value is generally presented by allocating 24 bits, i.e., eight bits for each of Y, Cb, and Cr. In the loss encoding method, considering that the eyesight of a person is more insensible to chrominance than luminance, an image is loss-encoded by reducing space resolutions of the chrominance values Cb/Cr. A 4:4:4 color format image, a space resolution of which is not reduced, maintains high quality color information in which chrominance values corresponding to luminance values exist for each pixel. In this case, N X N pixel luminance values and N X N pixel chrominance values are used in an N X N pixel image.

A 4:2:2 color format image is obtained by maintaining the 4:4:4 format chrominance values in a vertical direction and 1/2 horizontally downsampling the 4:4:4 format chrominance values. Therefore, if there are N X N 4:4:4 format chrominance values, then there are N X N/2 4:2:2 format chrominance values. A 4:2:0 color format image is obtained by 1/2 downsampling the 4:4:4 format chrominance values in a horizontal direction and a vertical direction. Therefore, if the number of 4:4:4 format chrominance values is N X N, then there are N/2 X N/2 the size of a 4:2:0 format chrominance values.

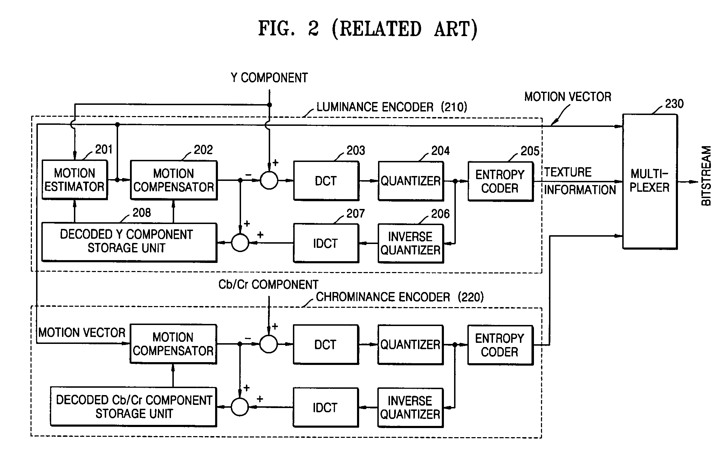

Figure 2 is a block diagram of a conventional color video encoding apparatus.

If a 4:4:4 format YCrCb image is input to the color video encoding apparatus, an encoded 4:4:4 format bitstream is output, if a 4:2:2 format YCrCb image is input to the color video encoding apparatus, an encoded 4:2:2 format bitstream is output, and if a 4:2:0 format YCrCb image is input to the color video encoding apparatus, an encoded 4:2:0 format bitstream is output.

The color video encoding apparatus includes a luminance encoder 210, a chrominance encoder 220, and a multiplexer 230. A chrominance component input to the chrominance encoder 220 is varied according to a color format of an input image, and a luminance component input to the luminance encoder 210 is fixed since the luminance component is the same for each of the 4:4:4, 4:2:2, and 4:2:0 format images, as described with reference to Figure 1. The luminance encoder 210 compensates for motion of an input image by predicting a motion vector from an input luminance component signal Y and outputs Y component texture information obtained by discrete cosine transforming, quantizing, and entropy coding the compensated image. The chrominance encoder 220 outputs Cb/Cr component texture information obtained by compensating for the motion of the input image based on the motion vector of the luminance component signal Y. The multiplexer 230 generates an encoded 4:4:4, 4:2:2, or 4:2:0 video bitstream by multiplexing the motion vector, the Y component texture information, and the Cb/Cr component texture information.

The operation of the luminance encoder 210 will now be described in detail. A motion estimation unit 201 determines a motion prediction value of a macro block of a current frame with reference to a reference frame and outputs a motion difference as a motion vector. That is, the motion estimation unit 201 finds the macro block to be motion-predicted in a predetermined search range of the reference frame, determines a most similar macro block, and outputs the difference between the macro blocks as the motion vector. A motion compensator 202 obtains a prediction macro block corresponding to the motion vector from the reference frame.

A difference obtained by subtracting the motion-compensated prediction macro block of the reference frame from the macro block of the current frame is discrete cosine transformed by a discrete cosine transformer 203, quantized by a quantizer 204, entropy-coded by an entropy coder 205, and output as texture information. The multiplexer 230 generates an encoded bitstream by multiplexing the texture information with the motion vector.

The difference obtained by subtracting the motion-compensated prediction macro block of the reference frame from the macro block of the current frame is called a residual value. This residual value is encoded to reduce an amount of data when encoding. Since errors are generated in a quantizing process, errors generated in discrete cosine transforming (DCT) and quantizing processes are included in video data represented as a bitstream.

To generate a reference image, the quantized residual signal is processed by an inverse quantizer 206 and an inverse discrete cosine transformer 207, added to the motion-predicted and compensated image, and stored in a decoded Y component storage unit 208. Therefore, the reference image stored in the decoded Y component storage unit 208 is an image obtained by adding encoding errors in the DCT and quantizing processes to the current image. The chrominance encoder 220 performs the same encoding operation as the luminance encoder 210 on the Cb/Cr component.

When one moving picture is separately encoded in the 4:4:4, 4:2:2, and 4:2:0 formats, since the chrominance encoder 220 encodes 4:4:4, 4:2:2, and 4:2:0 format Cb/Cr components and multiplexes them with a Y component, the Y component is repeatedly encoded.

According to the present invention there is provided an apparatus and method as set forth in the appended claims. Preferred features of the invention will be apparent from the dependent claims, and the description which follows.

The present invention provides a scalable video encoding and decoding methods and apparatuses for scalably encoding and decoding a moving picture in various color format.

According to an aspect of the present invention, there is provided a color video encoding method comprising: generating an encoded luminance bitstream by encoding a luminance component using a motion prediction based encoding method; and generating at least one encoded chrominance bitstream by encoding at least one color format chrominance component using a motion vector generated by the motion prediction based encoding method.

The generating at least one encoded chrominance bitstream may comprise: independently receiving and encoding 4:2:0, 4:2:2, and 4:4:4 color format chrominance components.

According to another aspect of the present invention, there is provided a color video encoding method comprising: generating an encoded base layer bitstream by downsampling a chrominance component of an original image and encoding the downsampled chrominance component and a luminance component which is not downsampled using a motion prediction based encoding method; and generating an encoded enhancement layer bitstream by encoding a residual chrominance component, which is a difference between a value obtained by upsampling a chrominance component obtained by decoding the encoded base layer bitstream and a chrominance component of an original image which has not been downsampled.

According to another aspect of the present invention, there is provided a color video decoding method comprising: generating a decoded luminance component by decoding a luminance bitstream encoded by using a motion prediction based encoding method using only a luminance component of an image; generating at least one decoded chrominance component by decoding at least one encoded chrominance bitstream; and generating at least one color format image by adding the decoded luminance component and the at least one decoded chrominance component.

According to another aspect of the present invention, there is provided a color video decoding method comprising: decoding a base layer bitstream generated by downsampling a chrominance component of an original image and encoding the downsampled chrominance component and a luminance component which is not downsampled using a motion prediction based encoding method; decoding an enhancement layer bitstream generated by encoding a residual chrominance component, which is a difference between a value obtained by upsampling a chrominance component obtained by decoding the generated base layer bitstream and a chrominance component of an original image, which has not been downsampled; and generating at least one enhancement layer color format image by adding a luminance component decoded from the base layer bitstream to a decoded chrominance component obtained by adding a chrominance component decoded from the base layer bitstream and a chrominance component obtained by decoding the enhancement layer bitstream.

According to another aspect of the present invention, there is provided a color video encoding apparatus comprising: a luminance encoder receiving a luminance component of an image, encoding the luminance component using a motion prediction based encoding method, and outputting an encoded luminance bitstream; and a chrominance encoder receiving at least one color format chrominance component, encoding the chrominance component using a motion vector generated by the motion prediction based encoding method, and outputting at least one encoded chrominance bitstream.

The chrominance encoder may comprise: a first chrominance encoder receiving and encoding a 4:2:0 color format chrominance component; a second chrominance encoder receiving and encoding a 4:2:2 color format chrominance component; and a third chrominance encoder receiving and encoding a 4:4:4 color format chrominance component.

According to another aspect of the present invention, there is provided a color video encoding apparatus comprising: a downsampler downsampling a chrominance component of an original image; a base layer encoder encoding the downsampled chrominance component and a luminance component, which is not downsampled, using a motion prediction based encoding method and outputting an encoded base layer bitstream; and an enhancement layer encoder encoding a residual chrominance component, which is a difference between a value obtained by upsampling a chrominance component obtained by decoding the encoded base layer bitstream and a chrominance component of an original image which has not been downsampled and outputting an encoded enhancement layer bitstream.

According to another aspect of the present invention, there is provided a color video decoding apparatus comprising: a luminance decoder receiving a luminance bitstream encoded by using a motion prediction based encoding method using only a luminance component of an image, decoding the luminance bitstream, and outputting a decoded luminance component; and a chrominance decoder receiving at least one encoded chrominance bitstream, decoding the at least one chrominance bitstream, generating at least one decoded chrominance component, and outputting at least one color format image obtained by adding the decoded luminance component and the at least one decoded chrominance component.

According to another aspect of the present invention, there is provided a color video decoding apparatus comprising: a base layer decoder receiving and decoding a base layer bitstream, which is generated by downsampling a chrominance component of an original image and encoding the downsampled chrominance component and a luminance component which is not downsampled using a motion prediction based encoding method; an enhancement layer decoder receiving and decoding an enhancement layer bitstream generated by encoding a residual chrominance component, which is a difference between a value obtained by upsampling a chrominance component obtained by decoding the generated base layer bitstream and a chrominance component of an original image which has not been downsampled; and an enhancement layer color image output unit outputting at least one enhancement layer color format image obtained by adding a luminance component decoded from the base layer bitstream to a decoded chrominance component obtained by adding a chrominance component decoded from the base layer bitstream and a chrominance component decoded from the enhancement layer bitstream.

According to another aspect of the present invention, there is provided an information storage medium having recorded thereon an encoded color image comprising: an encoded luminance bitstream generated by encoding a luminance component of an image using a motion prediction based encoding method; and at least one encoded chrominance bitstream generated by encoding at least one color format chrominance component using a motion vector generated by the motion prediction based encoding method.

The luminance bitstream may be generated by determining a motion vector, and multiplexing the motion vector and luminance texture information obtained by encoding the luminance component using a motion prediction based encoding method based on the motion vector.

Also, 4:2:0, 4:2:2, and 4:4:4 color format chrominance components may be independently encoded in the chrominance bitstream.

According to another aspect of the present invention, there is provided an information storage medium having recorded thereon an encoded color image comprising: an encoded base layer bitstream generated by downsampling a chrominance component of an original image and encoding the downsampled chrominance component and a luminance component which is not downsampled using a motion prediction based encoding method; and an encoded enhancement layer bitstream generated by encoding a residual chrominance component, which is a difference between a value obtained by upsampling a chrominance component obtained by decoding the encoded base layer bitstream and a chrominance component of an original image which has not been downsampled.

The above and other aspects of the present invention will become more apparent by describing in detail exemplary embodiments thereof with reference to the attached drawings in which:
Figure 1 illustrates an operation of performing loss encoding by reducing a color space resolution;
Figure 2 is a block diagram of a conventional color video encoding apparatus;
Figure 3 is a block diagram of a scalable encoding of color video apparatus according to an exemplary embodiment of the present invention;
Figure 4 is a block diagram of a scalable decoding of color video apparatus according to an exemplary embodiment of the present invention;
Figure 5 is a flowchart illustrating a scalable encoding of color video method according to an exemplary embodiment of the present invention;
Figure 6 is a flowchart illustrating a scalable color video decoding method according to an exemplary embodiment of the present invention;
Figure 7 is a block diagram of a scalable encoding of color video apparatus according to another exemplary embodiment of the present invention;
Figure 8 is a block diagram of a scalable decoding of color video apparatus according to another exemplary embodiment of the present invention;
Figure 9 is a flowchart illustrating a scalable encoding of color video method according to another exemplary embodiment of the present invention; and
Figure 10 is a flowchart illustrating a scalable decoding of method according to another exemplary embodiment of the present invention.

Hereinafter, the present invention will now be described more fully with reference to the accompanying drawings, in which exemplary embodiments of the invention are shown.

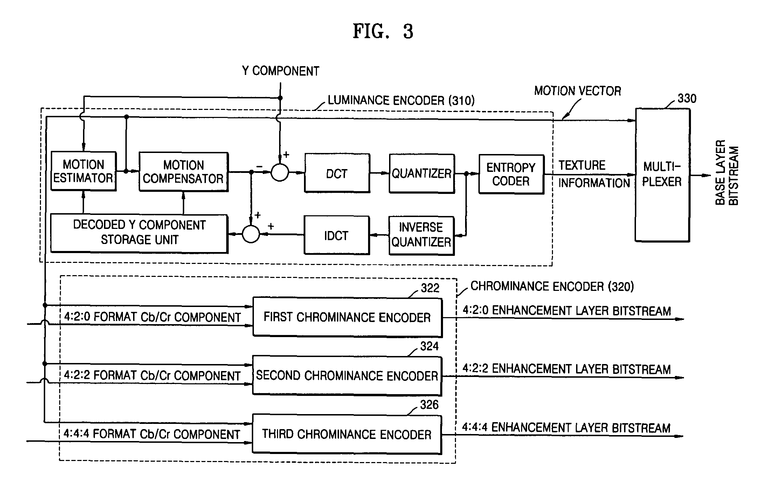

Figure 3 is a block diagram of a scalable encoding of color video apparatus according to an exemplary embodiment of the present invention.

The color video encoding apparatus includes a luminance encoder 310, a chrominance encoder 320, and a multiplexer 330. The chrominance encoder 320 includes a first chrominance encoder 322, a second chrominance encoder 324, and a third chrominance encoder 326.

The luminance encoder 310 receives a Y component, encodes the Y component using a motion prediction based encoding method, and outputs Y component texture information and a Y component motion vector. The encoding process is the same as described with reference to Figure 2. The first chrominance encoder 322 receives a 4:2:0 format Cb/Cr component, encodes the 4:2:0 format Cb/Cr component by compensating it using the Y component motion vector, and outputs a 4:2:0 enhancement layer bitstream. The second chrominance encoder 324 receives a 4:2:2 format Cb/Cr component, encodes the 4:2:2 format Cb/Cr component by compensating it using the Y component motion vector, and outputs a 4:2:2 enhancement layer bitstream. The third chrominance encoder 326 receives a 4:4:4 format Cb/Cr component, encodes the 4:4:4 format Cb/Cr component by compensating it using the Y component motion vector, and outputs a 4:4:4 enhancement layer bitstream. Any conventional motion prediction based encoding method can be used by the color video encoding apparatus. The multiplexer 330 outputs a base layer bitstream by multiplexing the encoded Y component texture information and the motion vector.

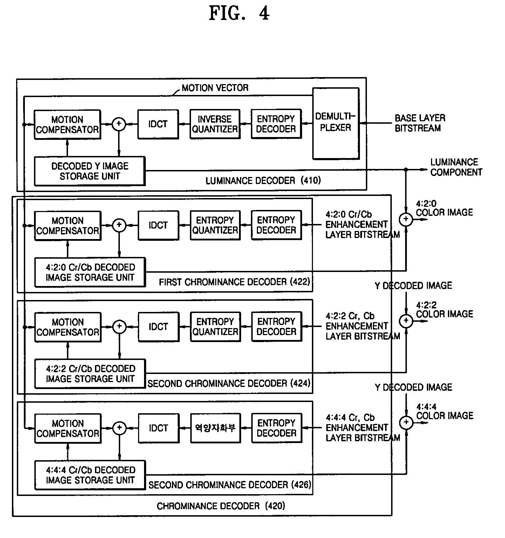

Figure 4 is a block diagram of a scalable decoding of color video apparatus according to an exemplary embodiment of the present invention.

The color video decoding apparatus includes a luminance decoder 410 and a chrominance decoder 420. The chrominance decoder 420 includes a first chrominance decoder 422, a second chrominance decoder 424, and a third chrominance decoder 426.

The luminance decoder 410 receives a base layer bitstream generated by the luminance encoder 310 and the multiplexer 330, extracts a motion vector, outputs the Y component by entropy decoding, inverse quantizing, and inverse discrete cosine transforming (IDCT) the base layer bitstream using the motion vector.

The first chrominance decoder 422 receives a 4:2:0 color format enhancement layer bitstream, generates a 4:2:0 chrominance component using the motion vector extracted by the luminance decoder 410, and outputs a 4:2:0 format color image obtained by adding the Y component output from the luminance decoder 410 to the 4:2:0 chrominance component.

The second chrominance decoder 424 receives a 4:2:2 color format enhancement layer bitstream, generates a 4:2:2 chrominance component using the motion vector extracted by the luminance decoder 410, and outputs a 4:2:2 format color image obtained by adding the Y component output from the luminance decoder 410 to the 4:2:2 chrominance component.

The third chrominance decoder 426 receives a 4:4:4 color format enhancement layer bitstream, generates a 4:4:4 chrominance component using the motion vector extracted by the luminance decoder 410, and outputs a 4:4:4 format color image obtained by adding the Y component output from the luminance decoder 410 to the 4:4:4 chrominance component.

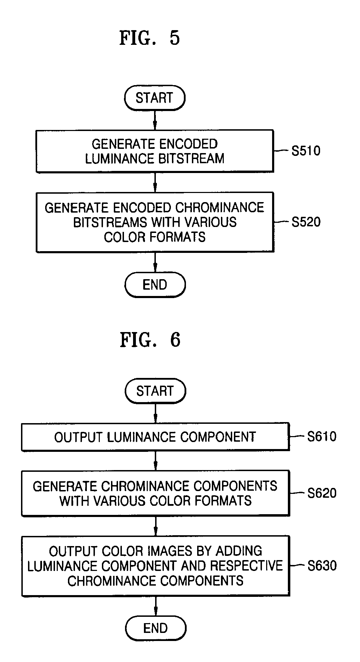

Figure 5 is a flowchart illustrating a scalable encoding of color video method according to an exemplary embodiment of the present invention.

A luminance component is encoded using one of the motion prediction based encoding methods described above in operation S510. Then, 4:2:0, 4:2:2, and 4:4:4 color format chrominance components are separately encoded using a motion vector extracted in the process of generating the luminance bitstream in operation S520. Accordingly, 4:2:0, 4:2:2, and 4:4:4 color format chrominance bitstreams are generated. Since the chrominance bitstreams are not transmitted when a network status is abnormal, scalable encoding is very useful considering network status.

Figure 6 is a flowchart illustrating a scalable decoding of color video method according to an exemplary embodiment of the present invention.

An encoded luminance bitstream generated using the color video encoding method is decoded to generate a luminance image in operation S610. The luminance image is a black/white image classified by light and shade since a chrominance component is not included. Next, 4:2:0, 4:2:2, and 4:4:4 color format chrominance images are generated by decoding 4:2:0, 4:2:2, and 4:4:4 color format chrominance bitstreams in operation S620. Then, 4:2:0, 4:2:2, and 4:4:4 format color images are generated by adding the chrominance images to the luminance image in operation S630. When the chrominance bitstreams cannot be received since the network status is abnormal, or when an error exists in the received chrominance bitstreams, a moving picture including only the luminance image is output. Therefore, scalable decoding can be performed according to circumstances.

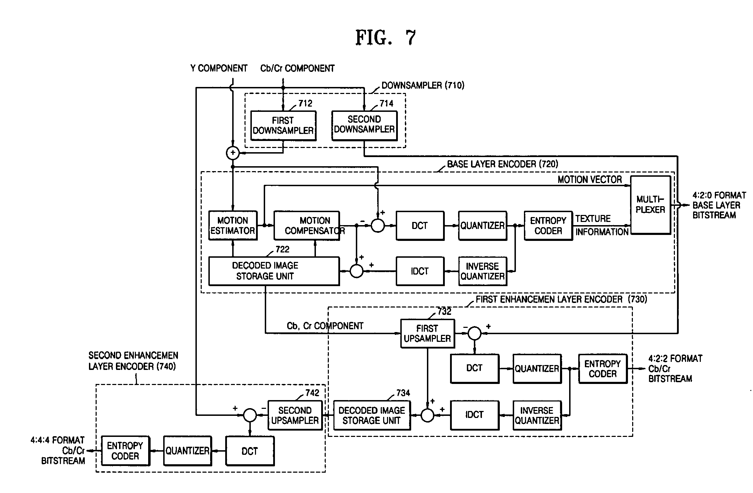

Figure 7 is a block diagram of a scalable encoding of color video apparatus according to another exemplary embodiment of the present invention.

The color video encoding apparatus includes a downsampler 710, a base layer encoder 720, a first enhancement layer encoder 730, and a second enhancement layer encoder 740.

A first downsampler 712 generates a 4:2:0 format Cb/Cr image including (N/2) X (N/2) pixels by downsampling a 4:4:4 format Cb/Cr image including N X N pixels, and a second downsampler 714 generates a 4:2:2 format Cb/Cr image including N X (N/2) pixels by downsampling the 4:4:4 format Cb/Cr image. A Y component and the 4:2:0 format Cb/Cr component generated by the first downsampler 712 are input to the base layer encoder 720, and a 4:2:0 format base layer bitstream is output from the base layer encoder 720. In the base layer encoder 720, a decoded 4:2:0 format Cb/Cr component stored in a decoded image storage unit 722 is input to a first upsampler 732 included in the first enhancement layer encoder 730. The first upsampler 732 generates a decoded 4:2:2 format Cb/Cr image by upsampling the decoded 4:2:0 format Cb/Cr component. The upsampling performed by the first upsampler 732 may be performed using a color upsampling filter used in an MPEG standard.

The first enhancement layer encoder 730 generates a 4:2:2 format Cb/Cr bitstream by performing DCT on, quantizing, and entropy coding a residual 4:2:2 format Cb/Cr image, which is a difference between a 4:2:2 format Cb/Cr component downsampled by a second downsampler 714 and the decoded 4:2:2 format Cb/Cr component generated by the first upsampler 732. In the generation of the 4:2:2 format Cb/Cr bitstream, a chrominance image obtained by inverse quantizing and performing IDCT on a chrominance component input to an entropy coder is added to the decoded 4:2:2 format Cb/Cr image generated by the first upsampler 732, and the added image is stored in a decoded image storage unit 734.

The decoded 4:2:2 format Cb/Cr component stored in the decoded image storage unit 734 is input to a second upsampler 742 included in the second enhancement layer encoder 740. The second upsampler 742 generates a 4:4:4 format Cb/Cr image by upsampling the decoded 4:2:2 format Cb/Cr component. The upsampling performed by the second upsampler 742 may be performed using a color upsampling filter used in the MPEG standard. The second enhancement layer encoder 740 generates a 4:4:4 format Cb/Cr bitstream by performing DCT, quantizing, and entropy coding a residual 4:4:4 format Cb/Cr image, which is a difference between a 4:4:4 format Cb/Cr component and the decoded 4:4:4 format Cb/Cr component generated by the second upsampler 742.

The encoding method performed in the base layer encoder 720, the first enhancement layer encoder 730, and the second enhancement layer encoder 740 may be any conventional motion prediction based encoding method.

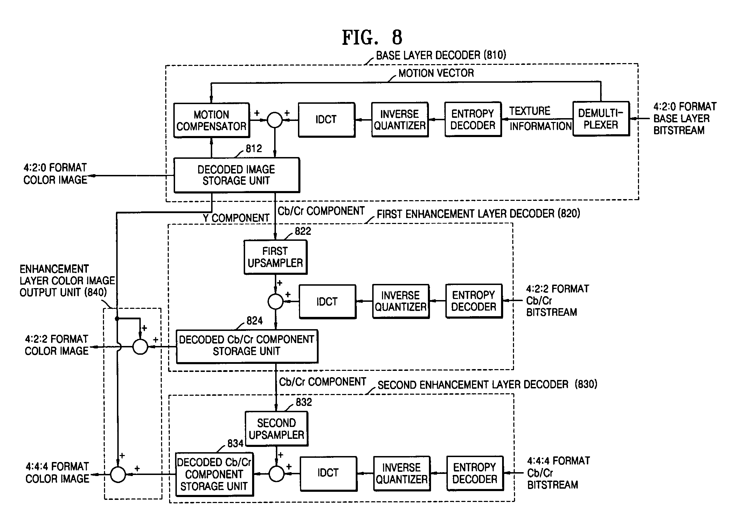

Figure 8 is a block diagram of a scalable decoding of color video apparatus according to another exemplary embodiment of the present invention.

The scalable color video decoding apparatus includes a base layer decoder 810, a first enhancement layer decoder 820, a second enhancement layer decoder 830 and an enhancement layer color video output unit 840.

The base layer decoder 810 receives a 4:2:0 format base layer bitstream and outputs a 4:2:0 format color image by decoding the 4:2:0 format base layer bitstream. A Y component and a 4:2:0 format Cb/Cr component of the 4:2:0 format color image are stored in a decoded image storage unit 812 included in the base layer decoder 810. The 4:2:0 format Cb/Cr component is input to the first enhancement layer decoder 820. A first upsampler 822 receives the 4:2:0 format Cb/Cr component and generates a 4:2:2 format Cb/Cr component. The first enhancement layer decoder 820 receives a 4:2:2 format Cb/Cr bitstream, generates a 4:2:2 format Cb/Cr component by entropy decoding, inverse quantizing, and performing IDCT on the 4:2:2 format Cb/Cr bitstream, generates a decoded 4:2:2 format Cb/Cr image by adding the generated 4:2:2 format Cb/Cr component and the upsampled 4:2:2 format Cb/Cr component, and stores the decoded 4:2:2 format Cb/Cr image in a decoded Cb/Cr component storage unit 824. The enhancement layer color video output unit 840 receives the stored 4:2:2 format Cb/Cr component and outputs a 4:2:2 format color image by adding the 4:2:2 format Cb/Cr component to the Y component output from the decoded image storage unit 812 included in the base layer decoder 810.

A second upsampler 832 included in the second enhancement layer decoder 830 receives the decoded 4:2:2 format Cb/Cr component from the decoded Cb/Cr component storage unit 824 included in the first enhancement layer decoder 820 and generates a 4:4:4 format Cb/Cr component. The second enhancement layer decoder 830 receives a 4:4:4 format Cb/Cr bitstream, generates a 4:4:4 format Cb/Cr component by entropy decoding, inverse quantizing, and performing IDCT on the 4:4:4 format Cb/Cr bitstream, generates a decoded 4:4:4 format Cb/Cr image by adding the generated 4:4:4 format Cb/Cr component and the upsampled 4:4:4 format Cb/Cr component, and stores the decoded 4:4:4 format Cb/Cr image in a decoded Cb/Cr component storage unit 834. The enhancement layer color video output unit 840 receives the stored 4:4:4 format Cb/Cr component and outputs a 4:4:4 format color image by adding the 4:4:4 format Cb/Cr component to the Y component output from the decoded image storage unit 812 included in the base layer decoder 810.

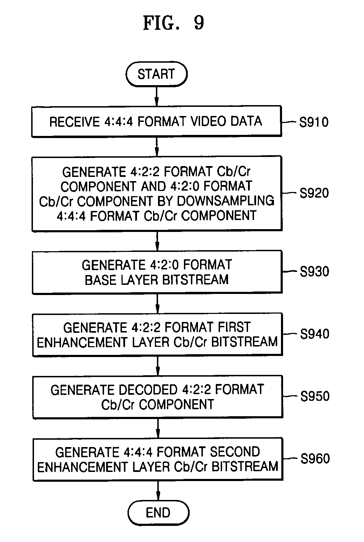

Figure 9 is a flowchart illustrating a scalable encoding of color video method according to another exemplary embodiment of the present invention.

Referring to Figure 9, a 4:4:4 format current video data is received in operation S910. A 4:2:2 format Cb/Cr component and a 4:2:0 format Cb/Cr component are generated by receiving and downsampling a 4:4:4 format Cb/Cr component of the 4:4:4 format current video data in operation S920. A base layer bitstream is generated by encoding the 4:2:0 format Cb/Cr component and a Y component of the 4:4:4 format current video data together using a motion prediction based encoding method in operation S930. A 4:2:2 format first enhancement layer Cb/Cr bitstream is generated by generating and encoding a residual 4:2:2 format Cb/Cr component, which is a difference between the 4:2:2 format Cb/Cr component generated by downsampling the 4:4:4 format Cb/Cr component and a 4:2:2 format Cb/Cr component generated by upsampling a decoded 4:2:0 format Cb/Cr component generated when the base layer bitstream is generated in operation S940.

A decoded 4:2:2 format Cb/Cr component is generated by adding a 4:2:2 format Cb/Cr component generated by decoding the 4:2:2 format first enhancement layer Cb/Cr bitstream and a 4:2:2 format Cb/Cr component generated by upsampling a decoded 4:2:0 format Cb/Cr component generated when the base layer bitstream is generated in operation S950. A 4:4:4 format second enhancement layer Cb/Cr bitstream is generated by generating and encoding a residual 4:4:4 format Cb/Cr component, which is a difference between the 4:4:4 format Cb/Cr component of the 4:4:4 format current video data and a 4:4:4 format Cb/Cr component generated by upsampling the decoded 4:2:2 format Cb/Cr component in operation S950.

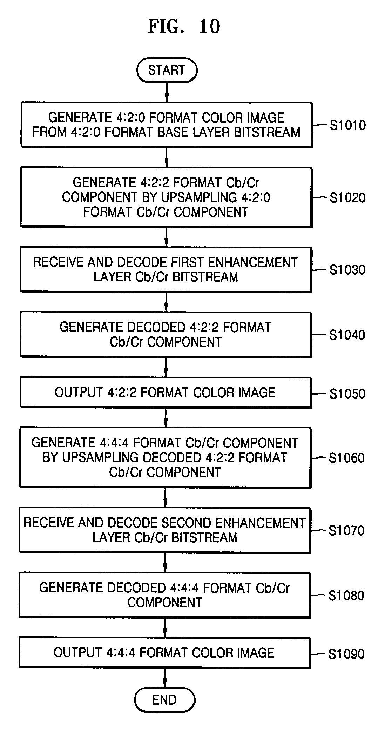

Figure 10 is a flowchart illustrating a scalable decoding of color video method according to another exemplary embodiment of the present invention.

Referring to Figure 10, in operation S1010, a decoded 4:2:0 format color image is generated by decoding a 4:2:0 format base layer bitstream using a motion prediction based decoding method. In operation S1020, a 4:2:2 format Cb/Cr component is generated by upsampling the decoded 4:2:0 format Cb/Cr component generated in operation S1010. In operation S1030, another 4:2:2 format Cb/Cr component is generated by decoding a first enhancement layer bitstream. In operation S1040, a decoded 4:2:2 format Cb/Cr component is generated by adding the 4:2:2 format Cb/Cr component generated in operation S1020 and the 4:2:2 format Cb/Cr component generated in operation S1030. In operation S1050, a 4:2:2 format color image is output by adding a Y component generated in operation S1020 and the decoded 4:2:2 format Cb/Cr component generated in operation S1040.

In operation S1060, a 4:4:4 format Cb/Cr component is generated by upsampling the decoded 4:2:2 format Cb/Cr component generated in operation S1040. In operation S1070, another 4:4:4 format Cb/Cr component is generated by receiving and decoding a second enhancement layer bitstream. In operation S1080, a decoded 4:4:4 4 format Cb/Cr component is generated by adding the 4:4:4 format Cb/Cr component generated in operation S1060 and the 4:4:4 format Cb/Cr component generated in operation S1070. In operation S1090, a 4:4:4 format color image is output by adding the Y component generated in operation S1020 and the decoded 4:4:4 format Cb/Cr component generated in operation S1080.

The present invention may be embodied in a general-purpose computer by running a program from a computer-readable medium, including but not limited to storage media such as magnetic storage media (ROMs, RAMs, floppy disks, magnetic tapes, etc.), optically readable media (CD-ROMs, DVDs, etc.), and carrier waves (transmission over the internet). The present invention may be embodied as a computer-readable medium having a computer-readable program code unit embodied therein for causing a number of computer systems connected via a network to effect distributed processing. And the functional programs, codes and code segments for embodying the present invention may be easily deducted by programmers in the art which the present invention belongs to.

As described above, according to an exemplary embodiment of the present invention, storage, transmission, and reproduction of a moving picture can be efficiently performed by scalably encoding the moving picture according to a color format in which the moving picture is encoded.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A color video encoding method comprising:
generating an encoded luminance bitstream by encoding a luminance component using a motion prediction based encoding method; and
generating at least one encoded chrominance bitstream by encoding at least one color format chrominance component using a motion vector generated by the motion prediction based encoding method.

2. The method of claim 1, wherein the generating the encoded luminance bitstream comprises:
obtaining a motion vector from the luminance component of an image; and
generating a luminance bitstream by multiplexing the motion vector obtained from the luminance component and luminance component texture information obtained by encoding the luminance component using the motion prediction based encoding method based on the motion vector obtained from the luminance component.

3. The method of claim 1 or 2, wherein the generating at least one encoded chrominance bitstream comprises:
independently receiving and encoding 4:2:0, 4:2:2 and 4:4:4 color format chrominance components.

4. A color video encoding method comprising:
generating an encoded base layer bitstream by downsampling a chrominance component of an original image and encoding the chrominance component of the original image which is downsampled and a luminance component of the original image which is not downsampled using a motion prediction based encoding method; and
generating an encoded enhancement layer bitstream by encoding a residual chrominance component, which is a difference between a value obtained by upsampling a chrominance component obtained by decoding the encoded base layer bitstream and a chrominance component of the original image which has not been downsampled.

5. The method of claim 4, wherein the downsampling the chrominance component of the original image comprises downsampling a 4:4:4 format chrominance component of the original image into a 4:2:0 format chrominance component.

6. The method of claim 4 or 5, wherein the generating the encoded enhancement layer bitstream comprises:
generating a 4:2:2 format chrominance component by upsampling a 4:2:0 format chrominance component obtained by decoding the encoded base layer bitstream, encoding a difference between the 4:2:2 format chrominance component generated by upsampling the 4:2:0 format chrominance component and a 4:2:2 format chrominance component obtained by downsampling the chrominance component of the original image to generate an encoded 4:2:2 format chrominance bitstream; and
generating a 4:4:4 format chrominance component by upsampling a 4:2:2 format chrominance component obtained by decoding the encoded 4:2:2 format chrominance bitstream, encoding a difference between the 4:4:4 format chrominance component and the chrominance component of the original image to generate an encoded 4:4:4 format chrominance bitstream.

7. A color video decoding method comprising:
generating a decoded luminance component by decoding a luminance bitstream encoded by using a motion prediction based encoding method using only a luminance component of an image;
generating at least one decoded chrominance component by decoding at least one encoded chrominance bitstream; and
generating at least one color format image by adding the decoded luminance component and the at least one decoded chrominance component.

8. The method of claim 7, wherein the generating the at least one decoded chrominance component comprises independently receiving and decoding encoded 4:2:0, 4:2:2, and 4:4:4 color format bitstreams.

9. A color video decoding method comprising:
decoding a base layer bitstream generated by downsampling a chrominance component of an original image and encoding the chrominance component which is downsampled and a luminance component of the original image which is not downsampled using a motion prediction based encoding method;
decoding an enhancement layer bitstream generated by encoding a residual chrominance component, which is a difference between a value obtained by upsampling a chrominance component obtained by decoding the base layer bitstream and a chrominance component of the original image which has not been downsampled; and
generating at least one enhancement layer color format image by adding a luminance component decoded from the base layer bitstream to a decoded chrominance component obtained by adding a chrominance component decoded from the base layer bitstream and a chrominance component obtained by decoding the enhancement layer bitstream.

10. The method of claim 9, wherein the downsampling the chrominance component of the original image comprises downsampling a 4:4:4 format chrominance component of an original image into a 4:2:0 format chrominance component.

11. The method of claim 9 or 10, wherein the decoding the enhancement layer bitstream comprises:
generating a 4:2:2 format chrominance component by upsampling a 4:2:0 format chrominance component obtained by decoding the base layer bitstream and generating a decoded 4:2:2 format chrominance component by adding the 4:2:2 format chrominance component and a value obtained by decoding a 4:2:2 format chrominance bitstream; and
generating a 4:4:4 format chrominance component by upsampling the decoded 4:2:2 format chrominance component and generating a decoded 4:4:4 format chrominance component by adding the 4:4:4 format chrominance component and a value obtained by decoding a 4:4:4 format chrominance bitstream.

12. A color video encoding apparatus comprising:
a luminance encoder (310) which receives a luminance component of an image, encodes the luminance component using a motion prediction based encoding method, and outputs an encoded luminance bitstream; and
a chrominance encoder (320) which receives at least one color format chrominance component, encodes the chrominance component using a motion vector generated by the motion prediction based encoding method, and outputs at least one encoded chrominance bitstream.

13. The apparatus of claim 12, wherein the luminance encoder (310) obtains a motion vector from the luminance component, and generates a luminance bitstream by multiplexing the motion vector and luminance component texture information obtained by encoding the luminance component using the motion prediction based encoding method based on the motion vector.

14. The apparatus of claim 12 or 13, wherein the chrominance encoder (320) independently receives and encodes 4:2:0, 4:2:2, and 4:4:4 color format chrominance components.

15. The apparatus of claim 14, wherein the chrominance encoder (320) comprises:
a first chrominance encoder (322) which receives and encodes a 4:2:0 color format chrominance component;
a second chrominance encoder (324) which receives and encodes a 4:2:2 color format chrominance component; and
a third chrominance encoder (326) which receives and encodes a 4:4:4 color format chrominance component.

16. A color video encoding apparatus comprising:
a downsampler (710) which downsamples a chrominance component of an original image;
a base layer encoder (720) which encodes the downsampled chrominance component and a luminance component, which is not downsampled, using a motion prediction based encoding method and outputs an encoded base layer bitstream; and
an enhancement layer encoder (730, 740) which encodes a residual chrominance component, which is a difference between a value obtained by upsampling a chrominance component obtained by decoding the encoded base layer bitstream and a chrominance component of an original image which has not been downsampled, and outputs an encoded enhancement layer bitstream.

17. The apparatus of claim 16, wherein the downsampler (710) comprises:
a first downsampler (712) which receives a 4:4:4 format chrominance component of the original image and downsamples the 4:4:4 format chrominance component into a 4:2:0 format chrominance component; and
a second downsampler (714) which receives a 4:4:4 format chrominance component of the original image and downsamples the 4:4:4 format chrominance component into a 4:2:2 format chrominance component.

18. The apparatus of claim 16 or 17, wherein the enhancement layer encoder (730, 740) comprises:
a first enhancement layer encoder (730) which generates a 4:2:2 format chrominance component by upsampling a 4:2:0 format chrominance component obtained by decoding the encoded base layer bitstream, encodes a difference between the 4:2:2 format chrominance component generated by upsampling the 4:2:0 format chrominance component and a 4:2:2 format chrominance component obtained by downsampling the chrominance component of the original image, and outputs an encoded 4:2:2 format chrominance bitstream; and
a second enhancement layer encoder (740) generates a 4:4:4 format chrominance component by upsampling a 4:2:2 format chrominance component obtained by decoding the encoded 4:2:2 format chrominance bitstream, encodes a difference between the 4:4:4 format chrominance component and the chrominance component of the original image, and outputs an encoded 4:4:4 format chrominance bitstream.

19. A color video decoding apparatus comprising:
a luminance decoder (410) which receives a luminance bitstream encoded by using a motion prediction based encoding method using only a luminance component of an image, decoding the luminance bitstream, and outputs a decoded luminance component; and
a chrominance decoder (420) which receives at least one encoded chrominance bitstream, decoding the at least one chrominance bitstream, generating at least one decoded chrominance component, and outputs at least one color format image obtained by adding the decoded luminance component and the at least one decoded chrominance component.

20. The apparatus of claim 19, wherein the chrominance decoder (420) independently receives and decodes encoded 4:2:0, 4:2:2, and 4:4:4 color format bitstreams.

21. A color video decoding apparatus comprising:
a base layer decoder (810) which receives and decodes a base layer bitstream, which is generated by downsampling a chrominance component of an original image and encoding the chrominance component which is downsampled and a luminance component which is not downsampled using a motion prediction based encoding method;
an enhancement layer decoder (820, 830) which receives and decodes an enhancement layer bitstream generated by encoding a residual chrominance component, which is a difference between a value obtained by upsampling a chrominance component obtained by decoding the generated base layer bitstream and a chrominance component of the original image which has not been downsampled; and
an enhancement layer color image output unit (840) which outputs at least one enhancement layer color format image obtained by adding a luminance component decoded from the base layer bitstream to a decoded chrominance component obtained by adding a chrominance component decoded from the base layer bitstream and a chrominance component decoded from the enhancement layer bitstream.

22. The apparatus of claim 21, wherein the enhancement layer decoder (820, 830) comprises:
a first enhancement layer decoder (820) which generates a 4:2:2 format chrominance component by upsampling a 4:2:0 format chrominance component obtained by decoding the generated base layer bitstream, and generates a decoded 4:2:2 format chrominance component by adding the 4:2:2 format chrominance component generated by upsampling the 4:2:0 format chrominance component and a value obtained by decoding a 4:2:2 format chrominance bitstream; and
a second enhancement layer decoder (830) which generates a 4:4:4 format chrominance component by upsampling the decoded 4:2:2 format chrominance component, and generates a decoded 4:4:4 format chrominance component by adding the 4:4:4 format chrominance component and a value obtained by decoding a 4:4:4 format chrominance bitstream.

23. An information storage medium having recorded thereon an encoded color image comprising:
an encoded luminance bitstream generated by encoding a luminance component of an image using a motion prediction based encoding method; and
at least one encoded chrominance bitstream generated by encoding at least one color format chrominance component using a motion vector generated by the motion prediction based encoding method.

24. The information storage medium of claim 23, wherein the luminance bitstream is generated by determining a motion vector from the luminance component, and multiplexing the motion vector and luminance texture information obtained by encoding the luminance component using the motion prediction based encoding method based on the motion vector.

25. The information storage medium of claim 23, wherein 4:2:0, 4:2:2, and 4:4:4 color format chrominance components are independently encoded in the chrominance bitstream.

26. An information storage medium having recorded thereon an encoded color image comprising:
an encoded base layer bitstream generated by downsampling a chrominance component of an original image and encoding the chrominance component which is downsampled and a luminance component of the original image which is not downsampled using a motion prediction based encoding method; and
an encoded enhancement layer bitstream generated by encoding a residual chrominance component, which is a difference between a value obtained by upsampling a chrominance component obtained by decoding the encoded base layer bitstream and a chrominance component of an original image which has not been downsampled.
